# EUROPEAN PATENT APPLICATION

(11) **EP 3 777 993 A1**
(43) Date of publication of application: **17.02.2021**
(21) Application number: 20174199.8
(22) Date of filing: 14.07.2016
(51) Int. Cl.: B01D 39/16, B01D 39/18, B01D 39/20

(54) **METHOD OF FORMING A FILTER MEDIUM FOR REMOVING WATER FROM WATER-HYDROCARBON EMULSIONS HAVING IMPROVED EFFICIENCY**

(30) Priority: 22.08.2015 US 201562208659 P
(62) Divisional of application: 16740994.5
(71) Applicant: Ahlstrom-Munksjö Oyj, 00100 Helsinki (FI)
(72) Inventor: GOODBY, Andrew, Sturgis, KY 42459 (US)
(74) Representative: Vossius & Partner Patentanwälte Rechtsanwälte mbB

(57) **Abstract**

A fuel water separation medium for removing water from water-hydrocarbon emulsions is provided, wherein the fuel water separation medium comprises (A) a first layer comprising nanofibers, and (B) a second layer comprising a fibrous web wherein the fibrous web comprises cellulosic fibers.

## Description

### Technical field

The present invention relates to a novel fuel water separation medium for removing water from water-hydrocarbon emulsions, a process for the preparation of the medium, a fuel water separator including the medium and the use of the medium for removing water from water-hydrocarbon emulsions.

### Background

There is an increasing demand for filter media that efficiently remove emulsified water from fuel. Specifically, an effectual fuel-water separation in new (bio-)diesel and gasoline engine systems requires media that are efficient in terms of water removal in order to avoid the known problems associated with a high amount of emulsified water in fuel. For instance, high amounts of water may considerably affect the performance of the carburetor, the fuel injection system and the engine itself due to lack of lubrication and/or corrosion protection caused by the water contamination. Ultimately, water contamination may result in increased wear and rust in the fuel system. Moreover, a blockage or damage of the carburetor and/or the fuel pump may occur.

In addition to increasingly stricter emission regulations, there is also an increasing demand for smaller filters without considerably sacrificing the achieved water removal efficiency, thereby saving space/weight and consequently fuel. Less fuel consumption results in less carbon dioxide emission and is therefore desirable in order to meet the vehicle emission regulations.

Some filter media of the prior art are saturated with water repellant additives for achieving a sufficiently high fuel-water separation efficiency, since these additives enhance the coalescence of water drops during the filtering process. Usually, these water repellant additives are silicone or fluorohydrocarbons which might not be desirable for environmental reasons.

Known fuel water separator filter media typically contain a high percentage of synthetic fibers, such as meltblown synthetic fibers, or even consist of synthetic fibers only. However, these filter media are not pleateable or self-supporting as such, particularly when working under the harsh conditions in connection with a combustion engine. As a result, these media have to be co-pleated and reinforced with some sort of additional mechanical support layer, such as a plastic or wire mesh backing. Further, media made with high levels of synthetic fiber typically tend to exhibit drape and they lack sufficient stiffness and rigidity causing the pleats to collapse without an additional support. A 100 % synthetic media as disclosed in the prior art cannot maintain a grooving pattern like corrugation or a pleated structure due to the thermal and mechanical properties of the synthetic fibers. However, grooving patterns are typically important for increasing the surface of filter media, thereby being able to provide the desired high fuel-water removal efficiency of the filter media.

Another issue to be addressed is that customers desire a longer service interval for filter media. This may be achieved when providing fuel water separation media that are able to remove water from water-fuel emulsions over a long period of time and with a high efficiency. Hence, a considerable loss of water removal efficiency over time due to e.g. clogging of the filter or wear is disadvantageous.

It is thus an objective of the present invention to provide an improved filter medium for water removal from water-fuel emulsions which addresses the above issues.

### Summary of the Invention

This summary is not an extensive overview of the present invention. It is neither intended to identify key elements of the invention nor to delineate the scope of the invention. The following summary merely presents some concepts of the present invention in a simplified form as a prelude to a more detailed description of exemplifying embodiments of the present invention.

The present invention relates to a fuel water separation medium for removing water from water-hydrocarbon emulsions comprising (A) a first layer comprising nanofibers; and (B)
a second layer comprising a fibrous web wherein the fibrous web comprises cellulosic fibers. The nanofibers have an average fiber diameter of about 50-350 nm, such as about 100-300 nm. The fuel water separation medium has a basis weight of about 100-300 g/m², such as about 150-300 g/m², and is characterized by having a net change in water removal efficiency of preferably less than about 10 %, more preferably less than about 5 %. The net change in water removal efficiency is defined as the difference between the water removal efficiency measured after 165 min and after 15 min according to SAEJ1488.

Without wishing to be bound by any particular theory, the Applicant surprisingly observed that by providing the inventive fuel water separation medium including, in combination:
- a specific layer comprising nanofibers, wherein the nanofibers have a specific average fiber diameter; and
- a specific fibrous web comprising cellulosic fibers; the fuel water separation medium also having:
- a specific basis weight of about 100-300 gsm (g/m²);
a better balance of the fuel water separation performance in terms of both water removal efficiency and long term effect may be achieved.

### Detailed Description of the Invention

### General Definitions:

The verbs "to comprise" and "to include" are used herein as open limitations that neither exclude nor require the existence of un-recited features.

The term "consisting essentially of" has the meaning that specific further component(s), which do not materially affect the essential characteristics of the layer or medium in question, may be present.

The features recited in depending claims are freely combinable unless otherwise explicitly stated.

Furthermore, it is to be understood that the use of "a" or "an", i.e. a singular form, used herein does not exclude the plural form.

Unless stated otherwise, all percentages are expressed as percentages by weight.

Unless otherwise indicated, the unit "um" corresponds to "*µ*m" or micron (s) .

Within the framework of the present description and of the following claims, "cellulose fibers" or "cellulosic fibers" comprise naturally occurring cellulosic material such as Northern bleached softwood kraft pulp (NBSK), Southern bleached softwood kraft pulp (SBSK) and hardwood pulps, such as Eucalyptus pulp.

"Synthetic Fibers" are manmade fibers including, but not limited to, thermoplastic fibers (such as polyether sulfone, polyester, PET, polyamide, polyvinylidene fluoride, polybutylene terephthalate), glass fibers and regenerated cellulose fibers.

Within the framework of the present description and of the following claims, "nanofibers" are fibers having a diameter less than 1 um or 1 micron (1000 nm), particularly 50-350 nm such as 100-300 nm. The nanofibers are formed according to known methods such as via an electrospinning process using suitable polymeric material(s). In this disclosure, nanofibers preferably are formed from thermoplastic polymeric materials including, but not limited to, polyether sulfone (PES), polyamide (PA) such as nylon, fluoropolymers such as e.g. polyvinylidene fluoride (PVDF), polyacrylonitrile, polyamide, particularly nylon, or PVDF.

A "fluoropolymer" is a fluorocarbon-based polymer which typically has a high resistance to solvents, acids, and bases. Suitable fluoropolymers are PVF (polyvinylfluoride); PVDF (polyvinylidene fluoride); PTFE (polytetrafluoroethylene); PCTFE (polychlorotrifluoroethylene); PFA, MFA (perfluoroalkoxy polymer); FEP (fluorinated ethylene-propylene); SETFE (polyethylenetetrafluoroethylene); ECTFE (polyethylenechlorotrifluoroethylene); FFPM/FFKM (perfluorinated Elastomer); FPM/FKM (fluorocarbon [chlorotrifluoroethylenevinylidene fluoride]); FEPM (fluoroelastomer [tetrafluoroethylene-propylene]); PFPE (perfluoropolyether); PFSA (perfluorosulfonic acid); and/or perfluoropolyoxetane.

A "fibrous web" as used herein includes a "nonwoven" or a "paper" and is a manufactured sheet or web of directionally or randomly oriented fibers bonded by friction, cohesion or adhesion. The fibers may be staple or continuous/substantially continuous or formed in situ and may be of natural or man-made materials.

Within the framework of the present description and of the following claims, a "fine fiber layer" may comprise one or more fiber layer(s) that comprises continuous/substantially continuous fibers and may be of natural or man-made materials.

"Staple fibers" are short cut fibers that may be typically not longer than about 45 mm.

"Continuous fibers" are long fibers or filaments that may be typically longer than about 45 mm. The term "substantially continuous fibers" includes continuous fibers and fibers which might have been broken during formation and/or use.

"Resins" or "binder resins" used in the inventive media may comprise phenolic, acrylic and epoxy resins. Resins can be applied or coated onto the substrate by any means know in the art. The resins can be applied to one side or both sides. The physical properties of the inventive media can be evaluated after it has been saturated and dried (SD) as well as after it has been saturated, dried and cured (SDC). The step of drying removes the solvent without crosslinking the resin.

An "adhesive" or "glue" is a chemical compound that assists in holding together the specific layers of the medium such as the nanofiber layer to the fibrous web and/or the fine fiber layer, if present. The adhesive or glue is present in the form of a partial layer between the layers that shall be hold together.

"Corrugations" (used interchangeably with "grooves" or "grooving") are added to a (preferably resin saturated) media in the machine direction to provide support for pleated media in the finished filter element.

The term "substantially no glass fibers" means that no glass fibers, i.e. 0% by weight of glass fibers, are present in the corresponding layer, based on the total weight of the corresponding layer.

The term "substantially no synthetic fibers" means that less than 10 % by weight, more preferably less than 5 % by weight, most preferably 0 % by weight, of synthetic fibers are present in the corresponding layer, based on the total weight of the corresponding layer.

The term "substantially no fibrillated fibers" means that less than 10 % by weight, more preferably less than 5 % by weight, most preferably 0 % by weight, of fibrillated fibers are present in the corresponding layer, based on the total weight of the corresponding layer.

The term "about" in the context of numerical values means that specific values may be modified by +/- 10%. As regards endpoints of ranges, the modifier "about" preferably means that the lower endpoint may be reduced by 10% and the upper endpoint may be increased by 10%. It is also contemplated that each numerical value or range disclosed in this application can be absolute, i.e. that the modifier "about" can be deleted.

If a layer (L1) is "on an upstream side" (or "on top") of a layer (L2), this means that the layer (L1) is situated, relative to the layer (L2), closer to the inventive media's surface which is in contact with the unfiltered water-fuel emulsions. On the other hand, if a layer (L1) is "on a downstream side" of a layer (L2), this means that the layer (L1) is situated, relative to the layer (L2), farther from the inventive media's surface which is in contact with the unfiltered water-fuel emulsions. In the latter case, the layer (L1) is, relative to layer (L2), closer to the inventive media's surface which is in contact with the filtered water-fuel emulsions, i.e. to the surface of the inventive media from which the filtered and dried fuel exits the inventive media.

The term "fuel" preferably refers to low sulphur diesel.

The "dust holding capacity" refers to the added weight of trapped particles when the media reaches a target pressure drop or terminal differential pressure such as 85 KPa.

The "water removal efficiency" in the context of the invention is the propensity of the inventive media to remove water from water-fuel emulsions, thereby producing dried fuel, as opposed to allowing the water-fuel emulsion to pass through the inventive media. Specifically, the "initial water removal efficiency" is the water removal efficiency directly after its preparation and not when being in usage, i.e. the filter is not loaded with particles or heavily soaked with water. In contrast, the "average water removal efficiency" means the mean water removal efficiency over time when being in usage.

The "net change in water removal efficiency" is defined as the water removal efficiency measured according to SAEJ1488 after 165 min from which the water removal efficiency measured according to SAEJ1488 after 15 min is subtracted.

### Brief description of the Figures

**Fig. 1****:** Construction of comparative and inventive filter media.
**Fig. 2****:** Overall water removal efficiency of an inventive medium as compared to comparative medium.

### The fuel water separation medium

The fuel water separation medium according to the invention comprises, or consists (essentially) of, (A) at least one first layer comprising nanofibers and (B) at least one second layer comprising a fibrous web. Optionally, (C) at least one fine fiber layer as third layer and/or (D) at least one adhesive layer may be present. These specific layers are described in the following in more detail:

### (A) First layer (also referred to as "nanofiber layer")

The first layer comprises, or consists (essentially) of, nanofibers, i.e. the first layer is a nanofiber layer. It is believed that this layer (possibly along with the second layer as defined below) provides efficient stripping of emulsified water and/or (surface) coalescence from water fuel emulsions. Specifically, emulsified water assembles/coalesces into larger droplets that may be efficiently stopped by the first layer, thereby reducing water saturation of the second layer which would deteriorate the second layer's water removal efficiency. Therefore, the first layer may be considered to be a water stripping and/or (surface) coalescing layer.

The nanofibers of the first layer have an average fiber diameter of about 50 to about 350 nm, preferably about 100 to about 300 nm.

In preferred embodiments, the nanofibers of the first layer may be electrospun directly onto the adjacent layer (like the second layer or, if present, an adhesive (coating) layer as defined below). Methods for preparing the nanofibers via electrospinning are known in the art. The obtained electrospun nanofibers are typically continuous or substantially continuous fibers.

In other preferred embodiments, the nanofibers may be synthetic nanofibers prepared from the following thermoplastic polymeric materials: polyethersulfone (PES); polyacrylonitrile; polyamide (PA) such as nylon; fluoropolymers such as polyvinylfluoride (PVDF); and/or mixtures thereof. In more preferred embodiments, the nanofibers may be polyamide fibers or fluoropolymeric fibers. In most preferred embodiments, the nanofibers may be nylon fibers or polyvinylfluoride fibers.

In other preferred embodiments, the first layer may consist, or consist essentially, of nanofibers as defined above.

In some embodiments, the nanofibers may be prepared from an adhesive and polyethersulfone. Preferably, the adhesive is a diisocyanate. The adhesive is used in an amount of about 1 to about 5 % by weight and the PES is used in an amount of about 95 to about 99% by weight, based on the total weight of the corresponding composition. This composition is mixed and manufactured into nanofibers via electrospinning directly onto the second layer or, if present, on an adhesive (coating) layer on top of the second layer as defined below.

### (B) Second layer (also referred to as "substrate layer")

The second layer comprises, or consists (essentially) of, at least one fibrous web. This fibrous web may be considered to be a substrate layer. The fibrous web comprises, or consists (essentially) of, cellulose fibers (also referred to as cellulosic fibers). If the substrate layer is saturated with a binder resin including a water repellant additive like silicone or fluorocarbon, it is believed that the emulsified water from the water fuel emulsions does not easily wet the inventive media's surface and beads up on both the nanofiber layer's and the substrate layer's surfaces. The beads coalesce into larger drops which then fall into the collection bowl of the fuel water separator comprising the inventive media. Therefore, the substrate layer may be also considered to be a stripper media (and/or surface coalescer).

In preferred embodiments, the cellulosic fibers may include about 0-100% by weight of softwood fibers and/or about 100-0% by weight of hardwood fibers based on the total weight of the second layer. More preferably, 40-10 % by weight of softwood fibers and 60-90 % by weight of hardwood fibers based on the total weight of the second layer may be present. Exemplary softwood fibers include fibers obtained from mercerized southern pine such as mercerized southern pine fibers or "HPZ fibers" or southern bleached softwood kraft such as Brunswick pine. Exemplary hardwood fibers include fibers obtained from Eucalyptus.

In preferred embodiments, the fibrous web may comprise cellulosic fibers in an amount of at least about 50 % by weight, preferably at least about 60% by weight or at least about 70 % by weight, more preferably at least about 80% by weight or 90% by weight based on the total weight of second layer. In most preferred embodiments, the fibrous web may consist (essentially) of cellulosic fibers. Due to the presence of cellulosic fibers, it is believed that the second layer may provide the stiffness that e.g. synthetic (such as meltblown) base sheets of the prior art will not be able to provide. However, if the substrate layer is not stiff enough, it may be very difficult to make a pleated and/or corrugated filter.

Preferably, the second layer may have a Gurley stiffness of about 2-15 g, preferably about 3-8 g such as about 5.5 g. The Gurley stiffness indicates the bending resistance of the analyzed filter medium.

In preferred embodiments, the fibrous web may comprise substantially no glass fibers. In other embodiments, the second layer may comprise about 70 to about 100 % by weight cellulosic fibers and about 0 to about 30 % by weight glass fibers, based on the total weight of the second layer.

In other preferred embodiments, the fibrous web may comprise substantially no synthetic fibers. In other embodiments, the second layer may comprise about 50 to about 90 % by weight cellulosic fibers and about 50 to about 10 % by weight synthetic fibers, based on the total weight of the second layer.

The average fiber diameter of the cellulose fibers in the second layer may be, for example, greater than or equal to about 0.5 microns, about 1 micron, about 5 microns, about 10 microns, about 20 microns,about 50 microns, or about 75 microns. In some instances, the average fiber diameter of the cellulose fibers may be less than or equal to about 75 microns, about 50 microns, about 20 microns, about 10 microns, about 5 microns, about 1 micron, or about 0.5 microns. Combinations of the above-referenced ranges are also possible (e.g., greater than or equal to about 1 micron and less than or equal to about 5 microns). Preferably, the average fiber diameter is greater than or equal to about 0.5 mm and less than or equal to about 20 microns).

In some embodiments, the cellulose fibers may have an average length of greater than or equal to about 0.5 mm, about 1 mm, about 2 mm, about 3 mm, about 4 mm, about 5 mm, about 10 mm, or about 20 mm. In some instances, the average length may be less than or equal to about 20 mm, about 10 mm, about 5 mm, about 4 mm, about 3 mm, about 2 mm, about 1 mm, or about 0.5 mm. Combinations of the above-referenced ranges are also possible (e.g., greater than or equal to about 1 mm and less than or equal to about 0.5 mm). Preferably, the average length may be greater than or equal to about 1 mm and less than or equal to about 7 mm.

In some embodiments, (micro-)fibrillated fibers (like (micro-)fibrillated cellulosic fibers) may be present in the second layer such as up to about 30 % by weight of (micro-)fibrillated fibers, preferably up to 20 % by weight of (micro-)fibrillated fibers, more preferably up to 10 % by weight of (micro-)fibrillated fibers. In alternative and more preferred embodiments, substantially no (micro-)fibrillated cellulose fibers may be present in the second layer.

In preferred embodiments, the second layer may have a basis weight in the range of 60-250 g/m², preferably in the range of 100-170 g/m².

In some embodiments, the air permeability of the second layer (w/phenolic resin) may be greater than or equal to about 10 cfm and/or less than or equal to about 20 cfm. Preferably, the air permeability may be greater than or equal to about 12 cfm and less than or equal to about 18 cfm such as e.g. 13 cfm, 16 cfm, or 17 cfm.

In other preferred embodiments, the second layer may comprise at least one binder resin such as a phenolic resin, an acrylic resin, a melamine resin, a silicone resin, a fluorocarbon resin/fluoropolymer, an epoxy resin and/or mixtures thereof. Preferably, the second layer may be coated or impregnated/saturated with the binder resin. In preferred embodiments, the binder resin may have a concentration of from 10-30 % by weight, preferably 15-20 % by weight, of the second layer.

The second layer may optionally include at least one additive which is common in the art. The at least one additive may be selected from a wet strength additive, a water repellant, a flame-retardant agent, a coloring agent, a hydrophobic agent, a hydrophilic agent, a wetting agent, an antimicrobial agent or an antistatic agent.

In preferred embodiments, the second layer may not comprise a water repellant additive without sacrificing the obtained water removal efficiency.

In some preferred embodiments, the second layer may be present on a downstream side of the first layer.

In some alternative preferred embodiments, the second layer may be present on an upstream side of the first layer.

### (C) Optional at least one third layer (also referred to as "fine fiber layer")

The at least one third layer is a fine fiber layer and may be optionally present in the inventive media. This at least one fine fiber layer serves to protect the downstream layers of the inventive media by capturing particulate impurities from the water-fuel emulsions to be filtered, thereby avoiding the clogging of the second layer's pores which would deteriorate the second layer's absorption performance and ultimately its water removal efficiency. Therefore, the fine fiber layer may be considered to be a protective layer.

In one embodiment, the inventive medium may not include a protective fine fiber layer as third layer on an upstream side of the first layer.

In an alternative embodiment, the inventive medium may comprise at least one fine fiber layer as protective layer, wherein the at least one fine fiber layer may be present on an upstream side of the first layer. In one embodiment, two fine fiber layers may be present, wherein one of the fine fiber layers may be present on an upstream side of the first layer and the other fine fiber layer may be present on a downstream side of the first layer.

In preferred embodiments, the at least one third layer has a basis weight of about 10 to about 100 g/m² such as about 15 to about 80 g/m².

In preferred embodiments, the fine fiber layer may comprise, or may consist (essentially) of, synthetic fibers. Synthetic fibers may include any suitable type of synthetic polymer fibers. Examples of suitable (thermoplastic) synthetic polymers fibers include, but are not limited to, fibers prepared from polyester; polyethylene terephthalate; polyolefin such as polyethylene or polypropylene; polybutylene terephthalate; polyamide; and/or mixtures thereof.

Synthetic fibers may also include multi-component fibers, i.e. fibers having multiple compositions such as bicomponent fibers.

In some embodiments, the synthetic fibers of the fine fiber layer may be formed via meltblowing, meltspinning, or spunbonding. These methods are known in the art. The obtained synthetic fibers are typically continuous and/or substantially continuous fibers.

In preferred embodiments, the third layer may comprise, or may consist (essentially) of, two sub-layers: (i) a spunbond fine fiber layer, such as a PET layer having preferably a basis weight of about 8 to about 30 g/m²; and (ii) a meltblown fine fiber layer, such as a PBT layer having preferably a basis weight of about 25 to about 80 g/m². Preferably, the spunbond fine fiber layer may be on an upstream side of the meltblown fine fiber layer and both sub-layers may be on an upstream side of the first and second layer. In some preferred embodiments, the meltblown layer may be present on a downstream side of the spunbond layer.

In other preferred embodiments, the third layer may comprise, or may consist (essentially) of, one sub-layer: a spunbond fine fiber layer, such as a PP/PE layer having preferably a basis weight of about 10 to about 20 g/m² such as 17 g/m². Preferably, this spunbond fine fiber sub-layer may be on a downstream side of the first and second layer.

The diameter range of the synthetic fibers of this meltblown fine fiber layer in the inventive media may be between about 0.1 to about 30 microns, more preferably between about 0.1 to about 5 microns for a majority of fibers such as e.g. 95 % or 98 % of the total number of meltblown fibers.

The average diameter of the synthetic fibers of this spunbond layer in the inventive media may be, for example, greater than or equal to about 10 microns, about 20 microns, or about 30 microns. In some instances, these synthetic fibers may have an average diameter of less than or equal to about 30 microns, about 20 microns, about 10 microns. Preferred is an average fiber diameter of less than or equal to about 20 microns and greater than or equal to 0.5 or micron(s).

### (D) Optional adhesive layer(s)

In preferred embodiments, the inventive medium may comprise at least one adhesive layer or adhesive coating between adjacent first, second or, if present, third layers as defined above. Specifically, in one preferred embodiment, the inventive medium may comprise at least one adhesive layer between the first and the second layer and/or between the first and the third layer, if present. In another preferred embodiment, the inventive medium may comprise at least one adhesive layer between the first and the second layer and/or between the second and the third layer, if present.

The adhesive can be any adhesive that can be spray-coated onto the layer to be coated. Preferably, the adhesive is selected from a polyurethane; acrylate; PVA; polyolefin ethylene co-polymer; and/or rubber-based adhesive. Most preferred are polyamide hot melt adhesives, polyurethane hot melt adhesives or PVOH stabilized carboxylated vinyl acetate-ethylene copolymers. In preferred embodiments, the adhesive is applied to the layer to be coated in a manner such that it does not affect the permeability of the corresponding layer. That is, the adhesive is applied with a coat weight of less than about 5 gsm.

Alternatively, the inventive medium may comprise no adhesive layer between the first and the second layer and/or between the first and the third layer, if present, but these layers are laminated or adhered to by any commonly known technique(s).

### Specific embodiments of the fuel water separation medium

In one embodiment, the inventive medium may comprise the second layer on a downstream side of the first layer.

In preferred embodiments, the inventive medium may not include the protective fine fiber layer as third layer on an upstream side of the first layer.

In an alternative embodiment, the inventive medium may comprise the second layer on an upstream side of the first layer.

In some other preferred embodiments, the inventive medium may comprise the third fine fiber layer on an upstream side of the first layer.

In other preferred embodiments, the inventive medium may comprise, or consist (essentially) of, the second layer on a downstream side of the first layer and the third (fine fiber) layer is on an upstream side of the first layer.

In other preferred embodiments, the inventive medium may comprise, or consist (essentially) of, a first fine fiber layer on an upstream side of the second layer, the second layer on an upstream side of the first layer and a second fine fiber layer on a downstream side of the first layer.

In most preferred embodiments, the inventive medium may therefore comprise, or consist (essentially) of, the following layers from downstream to upstream: (B) the second layer; (D1) a first adhesive layer on top of the second layer; (A) the first layer on top of the first adhesive layer; (D2) a second adhesive layer on top of the first layer; and (C) a fine fiber layer on top of the second adhesive layer. Preferably, the fine fiber layer may comprise, or consist (essentially) of, two sub-layers, namely a meltblown (such as PBT) and a spunbond (such as PET) fine fiber layer.

In other preferred embodiments, the inventive medium may therefore comprise, or consist (essentially) of, the following layers from downstream to upstream: (B) the second layer; (A) the first layer on top of the second layer; and (C) a first fine fiber layer on top of the first layer.

In other preferred embodiments, the inventive medium may therefore comprise, or consist (essentially) of, the following layers from downstream to upstream: (B) the second layer; (D) an adhesive layer on top of the second layer; and (A) the first nanofiber layer on top of the adhesive layer.

In most preferred embodiments, the inventive medium may therefore comprise, or consist (essentially) of, the following layers from downstream to upstream: (C1) a first fine fiber layer; (A) the first layer on top of the first fine fiber layer; (D1) a first adhesive layer on top of the first layer; (B) the second layer; (D2) a second adhesive layer on top of the second layer; and (C2) a second fine fiber layer on top of the second layer. Preferably, the first fine fiber layer may comprise, or consist (essentially) of, two sub-layers, namely a meltblown (such as PBT) and a spunbond (such as PET) fine fiber layer, and the second fine fiber layer may comprise, or consist (essentially) of, a spunbond fine fiber layer such as bicomponent PE/PP.

In other preferred embodiments, the inventive medium may therefore comprise, or consist (essentially) of, the following layers from downstream to upstream: (C1) a first fine fiber layer; (A) the first layer on top of the first fine fiber layer; (B) the second layer; and (C2) a second fine fiber layer on top of the second layer.

The inventive medium has a basis weight of about 100-300 g/m², preferably about 150-300 g/m².

The inventive medium is characterized by having a net change in water removal efficiency being preferably less than about 10 %, more preferably less than about 5 %. Specifically, the net change in water removal efficiency is defined as follows:
net change in water removal efficiency = (water removal efficiency after 165 min) - (water removal efficiency after 15 min);
wherein the water removal efficiency is measured according to SAEJ1488.

It has been found that the inventive medium may have excellent mechanical properties. In particular, the inventive medium may preferably show at least one of the following properties:
- a basis weight of about 150-300 g/m² when tested according to TAPPI Standard T 410 om-02; and/or
- an overall fuel-water separation efficiency of at least about 55% after 15 minutes when tested according to SAEJ1488; and/or
- an overall fuel-water separation efficiency of at least about 60% after 165 minutes when tested according to SAEJ1488; and/or
- a TSI aerosol penetration of less than or equal to about 15 %; and/or
- a TSI resistance to flow of about 5-75 mm H₂O; and/or
- an air permeability of about 3-20 cfm when tested according to TAPPI Standard T 251 cm-85; and/or
- a mean flow pore size of about 2-10 um when tested according to ASTM 316-03 (2011); and/or
- a leakage-corrected Frazier of 3-20 cfm when tested according to TAPPI Standard T 251 cm-85.

Further, it was found that the inventive media is also suitable for use as a particle removal filter medium for removing particles from fuel or oil.

### Process for the preparation of the filter medium

The process for the preparation of the inventive medium comprises the steps of
- providing a first homogeneous slurry;
- supplying the first slurry onto a dewatering screen to form a first deposit;
- removing the water from the deposit to form a wet fibrous web;
- drying the wet fibrous web while heating to form the second layer;
- optionally saturating the thus obtained second layer with a binder resin;
- optionally coating of a first adhesive layer on top of the thus obtained second layer;
- applying the first layer on top of the second layer or on top of the first adhesive layer coated onto the second layer, wherein the applying is preferably performed using electrospinning;
- optionally coating of a second adhesive layer (i) on top of the first layer or (ii) on top of the second layer; and
- optionally applying the third layer (iii) on top of the first layer, (iv) on top of the second adhesive layer coated onto the first layer, if present, (v) on top of the second layer or (vi) on top of the second adhesive layer coated onto the second layer, if present, wherein the applying is preferably performed by meltblowing a first fine fiber (sub-)layer and spunbonding a second fine fiber layer on top of the first fine fiber (sub-)layer;
wherein the first slurry comprises water and cellulosic fibers.

In this process, a first homogenous slurry is provided which may be prepared according to methods known in the art such as by adding and mixing the cellulosic fibers in water.

Once the first homogeneous slurry is prepared, it is applied onto a dewatering screen in order to prepare the second layer. This screen can be any screen commonly used in a paper making process. Preferably, this screen is a dewatering endless screen. Upon supplying the first slurry onto the dewatering screen, a first deposit is formed on the screen. During or after deposition of the slurry, water is removed to form a wet fibrous mat or sheet. Subsequently, the wet fibrous mat or sheet is dried while heating.

Optionally, impregnation of the thus obtained layer with a binder resin may be carried out followed by drying, and/or a first adhesive layer may be (spray-)coated on top of the thus prepared dried fibrous mat or sheet which corresponds to the second layer as defined above. The binder resin and the adhesive can be any one as defined above.

Next, nanofibers are applied on top of the second layer or on top of the first adhesive layer, if present, wherein the application is preferably performed using electrospinning. Methods for electrospinning of the nanofibers are known in the art.

Optionally, a second adhesive layer may be (spray-)coated (i) on top of the thus prepared nanofiber layer or (ii) on top of the second layer. In the latter case, the nanofiber layer is present on the side opposite to the second adhesive layer, i.e. the second layer has a nanofiber layer on a downstream side and the second adhesive layer on an upstream side of the second layer.

Optionally, a fine fiber layer may be applied (iii) on top of the first layer, (iv) on top of the second adhesive layer coated onto the first layer, if present, (v) on top of the second layer or (vi) on top of the second adhesive layer coated onto the second layer, if present. The application is preferably performed by meltblowing a first fine fiber (sub-)layer and spunbonding a second fine fiber layer on top of the first fine fiber (sub-)layer as defined above.

### Examples

The invention will now be described in further detail by way of the following examples:

### Test methods:

**Basis Weight:** The basis weight is measured according to TAPPI Standard T 410 om-02 and reported in grams per square meter (gsm or g/m²).

**Caliper or Thickness:** The caliper or thickness of the media is determined according to TAPPI Standard T 411 om-05 using a Thwing Albert 89-100 Thickness Tester.

**Corrugation Depth:** The corrugation depth is the difference between the caliper of the flat sheet of media and the thickness of the sheet after corrugating the media.

**Air Permeability (Frazier):** The air permeability is determined according to TAPPI Standard T 251 cm-85. Specifically, the air permeability of the filter medium as defined by airflow was measured in cubic feet per minute per square foot (cfm/sf or also referred to as cfm or CFM) at a pressure drop of 125 Pascal (0.5" water column) using a Textest FX 3300 Air Permeability Tester, a calibration plate as supplied by Textest, Ltd., Zurich, Switzerland and a thin plastic film - GBC Heatseal letter-size laminating pouch or equivalent plastic film under controlled atmospheric conditions. The units "cfm" and "cfm/sf" are interchangeable. Air permeability may also be referred to porosity, Frazier or Textest.

The Standard Textest procedure is as follows: Saturated/Dried paper is to be cured for 5 minutes at 175°C (Solvent Based Systems) or 2 minutes at 175°C (Water Based Systems) prior to testing. Saturated/Cured paper may be given an abbreviated cycle at an elevated temperature, since it is only necessary to drive off any moisture present. Unsaturated (Raw) paper samples may be tested Off Machine; drying is not necessary. Test Pressure: 125 Pa (or 0.5" w.c.). Place a sample to be measured felt side up between the clamping arm and the test head. Push the clamping arm down until it clicks, and locks into place, starting the test. Then note and record the displayed reading. Release the clamping arm by pressing down until it clicks a second time, stopping the test. All subsequent readings should be taken in the same fashion.

The Textest clamp leakage test procedure is as follows: Textest leakage is determined by using a thin plastic film sheet over the grooved media under the clamping mechanism on the textest machine. Test the sample according to the above standard textest test procedure and then note and record the small leakage measurement.

**Mean Flow Pore Size (MFP):** The size of the pores in the medium was determined using a bubble point method according to ASTM 316-03 (2011) utilizing a Porometer G3 Series (Quantachrome Instruments) and is reported in microns (*µ*m or um).

**Gurley stiffness:** The stiffness of the medium was determined according to TAPPI 543om-05 using a Gurley-type tester. The Gurley stiffness analyzes the ability of a sample to resist an applied bending force (i.e. the sample's bending resistance) . The unit of the Gurley stiffness is gf (gram force) which is herein sometimes also referred to as gms or g.

**TSI penetration:** The TSI penetration was determined using a TSI Incorporated Automated Filter Tester (Model 8130) to generate a salt (NaCl) or oil (DEHS) aerosol with particles of 0.3 micron diameter (modified EN 143 procedure). The particles in the upstream aerosol are counted and then the aerosol is used to challenge a flat sheet test sample (100 cm²) at a flow rate of 32 L/min. The particles in the aerosol are then counted again after passing completely through the test sample. The ratio between the quantities of particles counted before (upstream) and after (downstream) filtering is reported as the percent penetration, i.e. the downstream count is divided by the upstream count and multiplied by 100.

**TSI Resistance to Flow (mm H₂O):** TSI Resistance to flow is a measure of the pressure drop across the filter media. The higher the TSI resistance to flow, the greater the pressuredrop across the media. TSI Resistance is measured via an electronic pressure transducer and reported alongside the penetration number and the test flow rate. The measurement range of the instrument is 0-150mm H₂O (0-1470 Pa) with an accuracy of 2% of the scale (TSI tester system: Model 8127 8130 Automated filter Tester).

**Fuel Filter Water Separation Efficiency:** The filter medium was analyzed according to the SAEJ1488 test standard using a diesel-water emulsion (ultra-low sulfur diesel containing 2500 ppm water). Water removal is tested by taking samples upstream and downstream of the filter medium. The amount of water in the upstream and downstream samples is tested via Karl Fischer titration according to known methods.

**Example 1 (comparative):** The base substrate is a 100 % cellulosic wet laid nonwoven comprising 28.5% NBSK and 71.4% Eucalyptus pulp having a basis weight of 128 gsm and a flat sheet caliper of 0.36 mm (4 mils). The substrate is saturated with 17% phenolic resin. The substrate (w/phenolic resin) has an air permeability of 16 cfm. This sample does not include a water repellant additive.

**Example 2:** The base substrate is the same as in Example 1, but has an additional layer of polyether sulfone nanofibers electrospun directly onto the substrate at an add-on of 2 gsm for a total basis weight of 130 gsm and caliper of 0.38 mm (15 mils) (instructions for manufacturer; only theoretical values). The nanofibers have an average fiber diameter of 100-300 nm.

**Example 3 (comparative):** The base substrate has a total basis weight of 114 gsm and is a wet-laid nonwoven consisting of 100 % cellulosic fibers (81.6 % by weight cellulosic fibers in the medium). The substrate is saturated with 18% by weight phenolic resin including 1-3 % by weight silicone as H₂O repellant additive and 0.4 % by weight wet strength additive. The substrate (w/phenolic resin) has an air permeability of 13 cfm/sf. The base substrate has an additional adhesive layer (hot melt additive) on an upstream side and an additional protective fine fiber layer of meltblown PET (55 gsm) and spunbond PBT (15 gsm) on an upstream side directly onto the adhesive layer at an add-on of 70 gsm. The resulting filter medium is then corrugated.

**Example 4:** The base substrate has a total basis weight of 144 gsm and is a wet-laid nonwoven consisting of 100 % cellulosic fibers (81.6 % by weight cellulosic fibers in the medium), The substrate is saturated with 18% by weight phenolic resin including 1-3 % by weight silicone as H₂O repellant additive and 0.4 % by weight wet strength additive. The substrate (w/phenolic resin) has an air permeability of 13 cfm. The base substrate has an adhesive layer (PVOH stabilized, carboxylated vinyl acetate-ethylene copolymer)) on an upstream side and a layer of nylon nanofibers electrospun directly onto the adhesive layer on an upstream side. An additional adhesive layer (hot melt additive) on an upstream side directly onto the nanofiber layer is present. The nylon nanofibers' diameter is 90-340 nm. An additional protective fine fiber layer of meltblown PET (55 gsm) and spunbond PBT (15 gsm) on an upstream side directly onto the additional adhesive layer at an add-on of 70 gsm is present. The resulting filter medium is then corrugated.

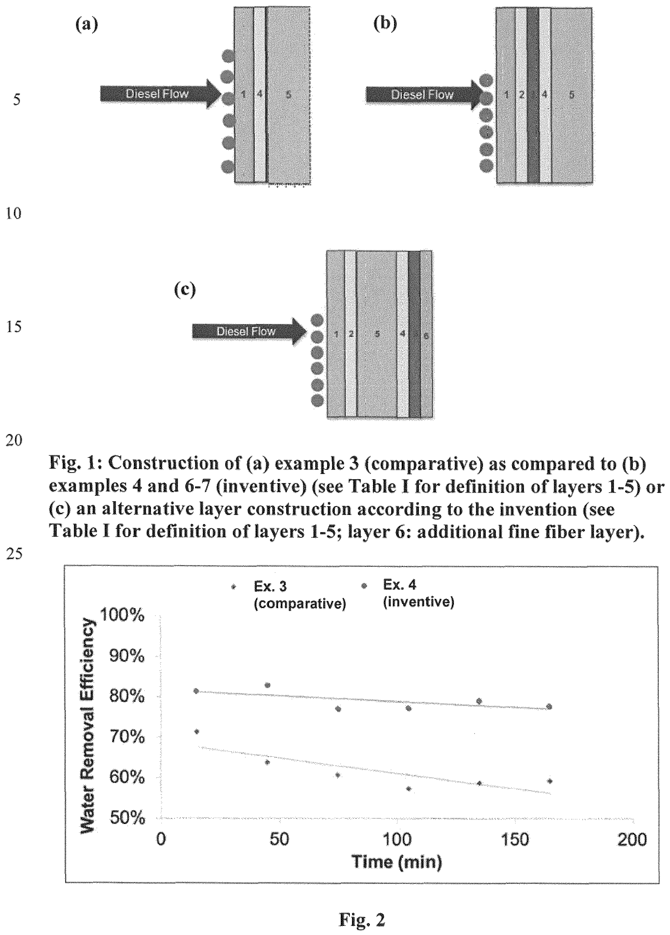

Table I shows the structures of examples 3 and 4 (see also Figure 1):

**Table I**

| | **Example 3** (base paper A-fine fiber) | **Example 4** (base paper A -nylon nano-fine fiber) |
|---|---|---|
| 5 | **Base paper** Weight: 114gsm | **Base paper** Weight: 114gsm |
| | 18% Phenolic Resin with silicone additive, 0.4% Wet-strength additive, 81.6% Cellulose Fibers | 18% Phenolic Resin with silicone additive, 0.4% Wet-strength additive, 81.6% Cellulose Fibers |
| | Corrugated | Corrugated |
| 4 | **N/A** | **Adhesive layer** |
| 3 | **N/A** | **Nanofiber Layer (Nylon)** |
| 2 | **Adhesive layer** | |
| 1 | **70 gsm Fine-fiber Layer** 55gsm layer of PBT meltblown 15gsm PET spunbond | |

**Example 5 (comparative):** The base substrate has a total basis weight of 150 gsm and is a wet-laid nonwoven consisting of 100 % cellulosic fibers (84 % by weight cellulosic fibers in the medium). The substrate is saturated with 16% by weight phenolic resin including 1-3 % by weight fluorocarbon as H₂O repellant additive and 0.6 % by weight wet strength additive. The substrate (w/phenolic resin) has an air permeability of 16.8 cfm. The base substrate has an additional protective fine fiber layer of meltblown PET (55 gsm) and spunbond PBT (15 gsm) on an upstream side directly onto the substrate layer at an add-on of 70 gsm. The resulting filter medium is then corrugated.

**Example 6:** The base substrate has a total basis weight of 150 gsm and is a wet-laid nonwoven consisting of 100 % cellulosic fibers (84 % by weight cellulosic fibers in the medium). The substrate is saturated with 16% by weight phenolic resin including 1-3 % by weight fluorocarbon as H₂O repellant additive and 0.6 % by weight wet strength additive. The substrate (w/phenolic resin) has an air permeability of 17 cfm. The base substrate has an additional adhesive layer (polyurethane, heat activated water dispersion) on an upstream side. In addition, a layer of polyamide nanofibers electrospun directly onto the adhesive layer on an upstream side and an additional adhesive layer (polyurethane, hot melt adhesive) on an upstream side directly onto the nanofiber layer are present. The polyamide nanofibers' average diameter is about 130-200 nm. An additional protective fine fiber layer of meltblown PET (55 gsm) and spunbond PBT (15 gsm) on an upstream side directly onto the adhesive layer at an add-on of 70 gsm is further present. The resulting filter medium is corrugated.

**Example 7:** The base substrate has a total basis weight of 150 gsm and is a wet-laid nonwoven consisting of 100 % cellulosic fibers (84.0 % by weight cellulosic fibers in the medium). The substrate is saturated with 16.0% by weight phenolic resin including 1-3 % by weight fluorocarbon as H₂O repellant additive and 0.6 % by weight wet strength additive. The substrate (w/phenolic resin) has an air permeability of 17 cfm. The base substrate has an additional adhesive layer (polyurethane, heat activated water dispersion) on an upstream side. In addition, a layer of polyvinylidenefluoride (PVDF) nanofibers electrospun directly onto the adhesive layer on an upstream side and an additional adhesive layer (polyurethane, hot melt additive) on an upstream side directly onto the nanofiber layer are present. The polyamide nanofibers' average diameter is about 130-200 nm. An additional protective fine fiber layer of meltblown PET (55 gsm) and spunbond PBT (15 gsm) on an upstream side directly onto the adhesive layer at an add-on of 70 gsm is further present. The resulting filter medium is corrugated.

**Example 8 (comparative):** The base substrate has a total basis weight of 150 gsm and is a wet-laid nonwoven consisting of 100 % cellulosic fibers (84 % by weight cellulosic fibers in the medium). The substrate is saturated with 16% by weight phenolic resin including 1-3 % by weight fluorocarbon as H₂O repellant additive and 0.6 % by weight wet strength additive. The substrate (w/phenolic resin) has an air permeability of 16.8 cfm. The resulting filter medium is then corrugated.

**Example 9:** The base substrate has a total basis weight of 150 gsm and is a wet-laid nonwoven consisting of 100 % cellulosic fibers (84 % by weight cellulosic fibers in the medium). The substrate is saturated with 16% by weight phenolic resin including 1-3 % by weight fluorocarbon as H₂O repellant additive and 0.6 % by weight wet strength additive. The substrate (w/phenolic resin) has an air permeability of 17 cfm. The base substrate has an additional adhesive layer (polyurethane, heat activated water dispersion) on an upstream side. In addition, a layer of polyamide nanofibers electrospun directly onto the adhesive layer on an upstream side is present. The polyamide nanofibers' average diameter is about 130-200 nm. The resulting filter medium is corrugated.

**Example 10:** The base substrate has a total basis weight of 150 gsm and is a wet-laid nonwoven consisting of 100 % cellulosic fibers (84.0 % by weight cellulosic fibers in the medium). The substrate is saturated with 16.0% by weight phenolic resin including 1-3 % by weight fluorocarbon as H₂O repellant additive and 0.6 % by weight wet strength additive. The substrate (w/phenolic resin) has an air permeability of 17 cfm. The base substrate has an additional adhesive layer (polyurethane (PU), heat activated water dispersion) on an upstream side. In addition, a layer of polyvinylidenefluoride (PVDF) nanofibers electrospun directly onto the adhesive layer on an upstream side is present. The polyamide nanofibers' average diameter is about 130-200 nm. The resulting filter medium is corrugated.

Table II-III show the furnish compositions of Examples 1-10 and Tables IV-VI show the properties of the thus obtained filter media:

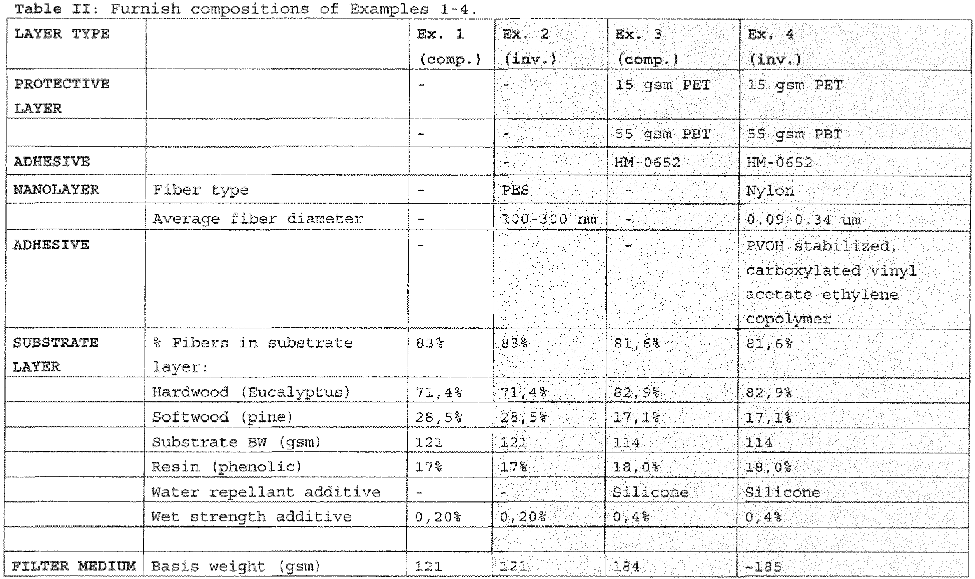

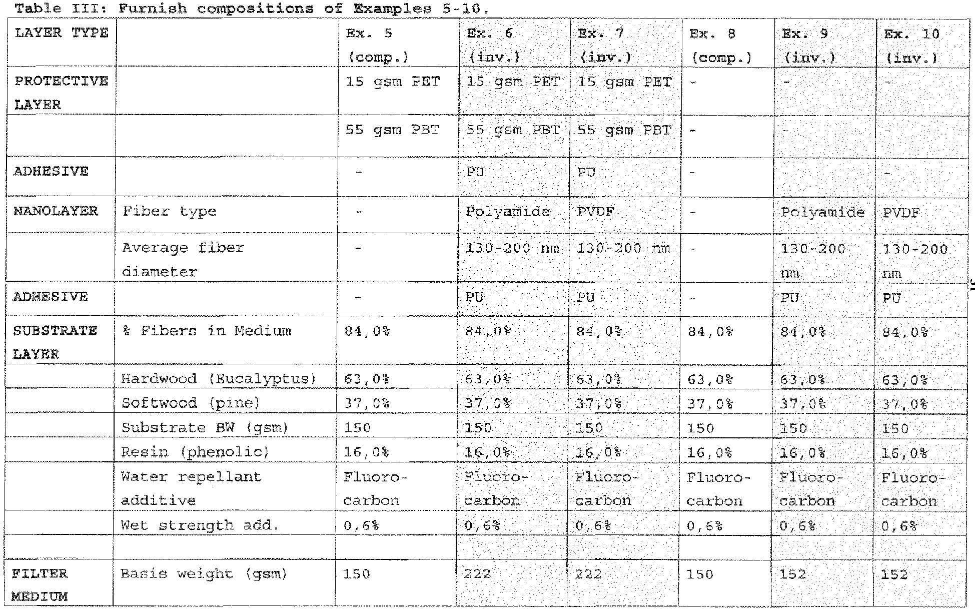

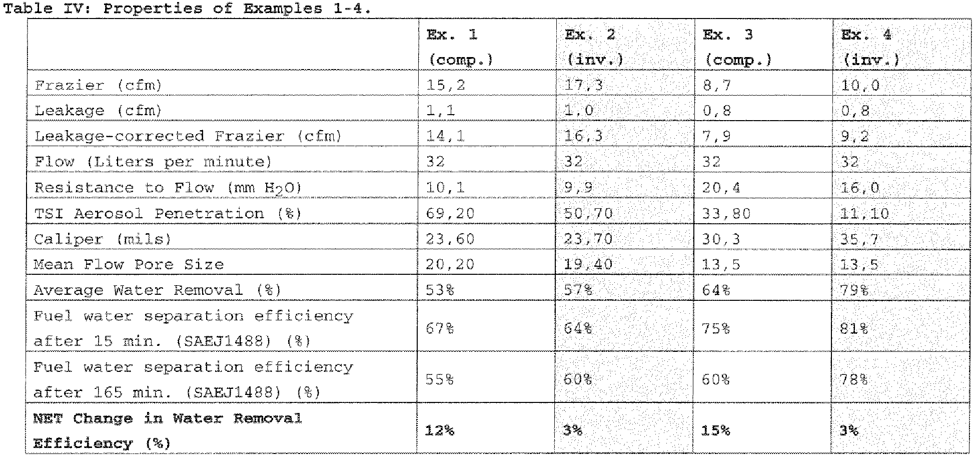

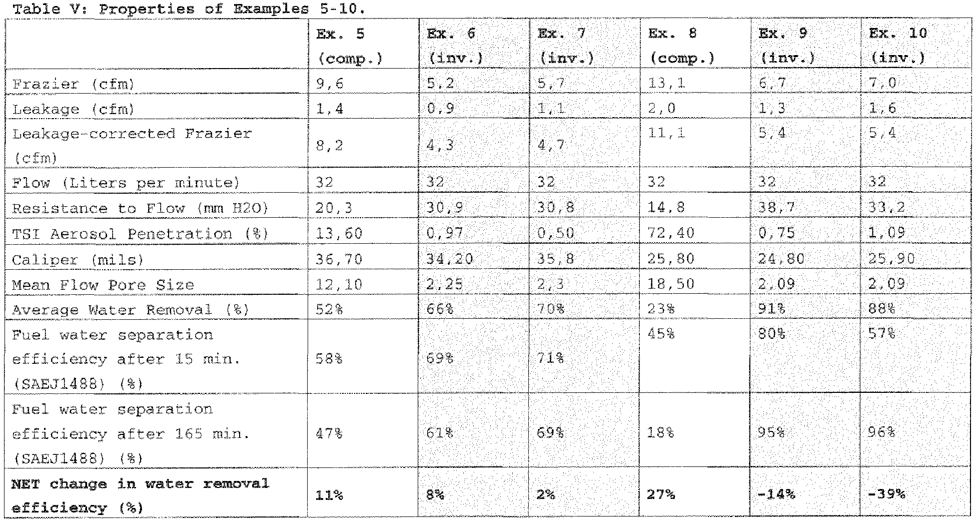

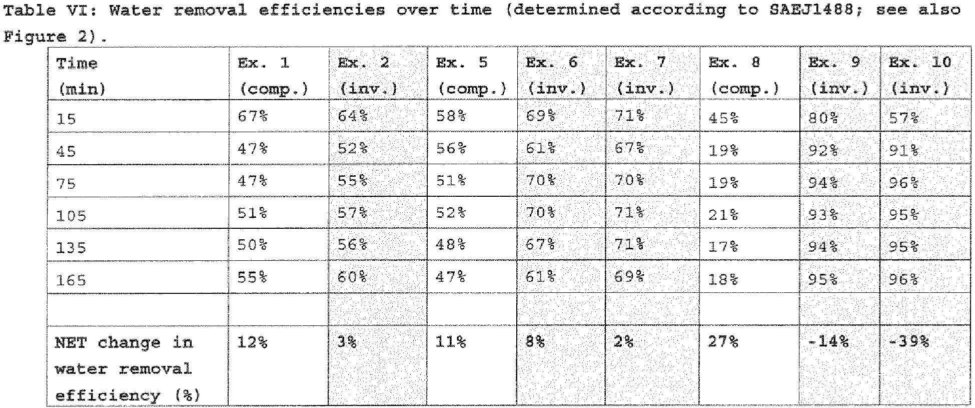

Tables IV-VI and Figure 2 show that the initial and average water removal efficiency performance of the inventive media with nanofiber coating (Examples 2, 4, 6, 7, 9 and 10) is higher than the one of the same control media without nanofiber coating (Examples 1, 3, 5 and 8). Moreover, the control medium without nanofiber coating (Examples 1, 3, 5 and 8) loses its fuel-water efficiency over time to a much greater extent than the same inventive medium with nanofiber coating (Examples 2, 4, 6, 7, 9 and 10). The negative NET change in water removal efficiency is indicative for enhanced water removal efficiency over time (see Examples 9 and 10). Thus, the water removal performance of the inventive media remains consistent or is even increased over time compared to the control media without nanofiber coating.

Moreover, a comparison between Examples 6 and 9 (or Examples 7 and 10) illustrates that the presence of a protective fine fiber layer as third layer on an upstream side from the nanofiber layer is not essential for achieving the desired initial and average water removal efficiency and/or the desired NET change in water removal efficiency which is indicative for the long term performance of the fuel water separation medium or its life time cycle. In addition, the water removal efficiency (initial, average, NET change) obtained for the inventive media of Examples 4, 6, 7, 9 and 10 illustrates that nanofibers formed from polyamide or PVDF are particularly preferred.

### Specific Embodiments

The invention may be further illustrated by the following specific embodiments:
1. A fuel water separation medium for removing water from water-hydrocarbon emulsions comprising
   (A) a first layer comprising nanofibers,
   (B) a second layer comprising a fibrous web, wherein the fibrous web comprises cellulosic fibers;
      wherein the nanofibers have an average fiber diameter of about 50-350 nm, such as about 100-300 nm;
      wherein the fuel water separation medium has a basis weight of about 100-300 g/m², such as about 150-300 g/m²;
      wherein the fuel water separation medium is characterized by having a net change in water removal efficiency measured according to SAEJ1488 being preferably less than about 10 %, more preferably less than about 5 %; and
      wherein the net change in water removal efficiency is defined as follows:
      net change in water removal efficiency = water removal efficiency after 165 min - water removal efficiency after 15 min.
2. The filter medium according to item 1, wherein the filter medium is characterized by a TSI aerosol penetration of less than or equal to about 15 %, preferably less than or equal to about 10 %, more preferably less than or equal to about 5 %.
3. The filter medium according to any one of items 1 or 2, wherein the filter medium is characterized by a mean flow pore size of about 2-10 microns.
4. The medium according to any of the preceding items, wherein the fibrous web of the second layer is a wet-laid fibrous web.
5. The medium according to any of the preceding items, wherein the nanofibers are synthetic nanofibers selected from polyethersulfone (PES); polyacrylonitrile; polyamide (PA) such as nylon; and fluoropolymer such as polyvinylfluoride (PVDF); and/or mixtures thereof.
6. The medium according to item 5, wherein the nanofibers are polyamide nanofibers or fluoropolymeric nanofibers.
7. The medium according to any of the preceding items, wherein the second layer has a basis weight of about 60-250 g/m².
8. The medium according to any of the preceding items, wherein the second layer has a Gurley stiffness of about 2-15 g.
9. The medium according to any of the preceding items, wherein the second layer comprises substantially no glass fibers.
10. The medium according to any of the preceding items, wherein the second layer comprises substantially no synthetic fibers.
11. The medium according to any of the preceding items, wherein the second layer comprises cellulosic fibers in an amount of at least about 50 % by weight such as at least about 60% by weight or at least about 80 % by weight, based on the total weight of second layer.
12. The medium according to any of the preceding items, wherein the nanofibers of the first layer, which are preferably prepared from an adhesive, which is preferably used in an amount of about 1 to about 5 % by weight, and a polyethersulfone which is preferably used in an amount of about 95 to about 99% by weight, based on the total weight of the nanofibers, are electrospun directly onto the second layer.
13. The medium according to any of the preceding items, wherein the first layer consists essentially of nanofibers.
14. The medium according to any of the preceding items, wherein the second layer includes substantially no fibrillated fibers such as fibrillated cellulosic fibers.
15. The medium according to any of the preceding items, wherein the second layer does not comprise a water repellant additive.
16. The medium according to any of the preceding items, wherein the second layer is on a downstream side of the first layer.
17. The medium according to any one of items 1-15, wherein the second layer is on an upstream side of the first layer.
18. The medium according to any of the preceding items, wherein the medium does not include a protective fine fiber layer as third layer on an upstream side of the first layer.
19. The medium according to any one of items 1-17, wherein the medium comprises a third layer on an upstream side of the first layer, the third layer being a protective fine fiber layer.
20. The medium according to any one of items 18 or 19, wherein the protective fine fiber layer comprises, or consists of, synthetic fibers such as synthetic fibers selected from polyester, polyethylene terephthalate, polyolefin, polybutylene terephthalate and/or polyamide.
21. The medium according to items 18-20, wherein the third layer comprises a spunbond fiber sub-layer, such as a PET layer having preferably a basis weight of about 8 to about 30 g/m², and a meltblown fiber sub-layer, such as a PBT layer having preferably a basis weight of about 25 to about 80 g/m².
22. The medium according to items 18-21, wherein the third layer has a basis weight of about 10 to about 200 g/m² such as about 15 to about 100 g/m².
23. The medium according to any of items 19-22, wherein the second layer is on a downstream side of the first layer and the third layer is on an upstream side of the first layer.
24. The medium according to any of items 19-22, the second layer is on an upstream side of the first layer and the third layer is on an upstream side of the second layer.
25. The medium according to any of the preceding items, wherein the medium comprises an adhesive layer between the first and the second layer.
26. The medium according to any of items 19-25, wherein the medium comprises an adhesive layer between the first and the third layer.
27. The medium according to any one of items 25-26, wherein said adhesive layer(s) comprise(s) an adhesive selected from polyurethane; acrylate; PVA; polyolefin ethylene co-polymer; and/or rubber-based adhesive.
28. The filter medium according to any of the preceding items, consisting, or consisting essentially, of
   (A) the first layer;
   (B) the second layer;
   (C) optionally the third layer;
   (D1) optionally the adhesive layer between the first and the second layer; and
   (D2) optionally the adhesive layer on a downstream side of the third layer, if present.
29. The filter medium according to any one of items 1-27, consisting, or consisting essentially, of
   (A') the first layer;
   (B') the second layer;
   (C') optionally two of the third layers;
   (D1') optionally the adhesive layer between the first and the second layer; and
   (D2') optionally the adhesive layer on an upstream surface of the second layer.
30. The medium according to any of the preceding items, wherein the filter medium is characterized by a basis weight of about 150-300 g/m² when tested according to TAPPI Standard T 410 om-02.
31. The medium according to any of the preceding items, wherein the filter medium is characterized by an overall fuel-water separation efficiency of at least about 55% after 15 minutes when tested according to SAEJ1488.
32. The medium according to any of the preceding items, wherein the filter medium is characterized by an overall fuel-water separation efficiency of at least about 60% after 165 minutes when tested according to SAEJ1488.
33. The medium according to any of the preceding items, wherein the filter medium is characterized by a TSI resistance to flow of about 5-75 mm H₂O.
34. The medium according to any of the preceding items, wherein the filter medium is characterized by an air permeability of about 3-20 cfm when tested according to TAPPI Standard T 251 cm-85.
35. The medium according to any of the preceding items, wherein the filter medium is characterized by a leakage-corrected Frazier of 3-20 cfm when tested according to TAPPI Standard T 251 cm-85.
36. Process for the preparation of the medium according to any of items 1 to 35, the process comprising the steps of
   - providing a first homogeneous slurry;
   - supplying the first slurry onto a dewatering screen to form a first deposit;
   - removing the water from the deposit to form a wet fibrous web; (d) drying the wet fibrous web while heating to form the second layer;
   - optionally saturating the thus obtained second layer with a binder resin;
   - optionally coating of a first adhesive layer on top of the thus obtained second layer;
   - applying the first layer on top of the second layer or on top of the first adhesive layer coated onto the second layer, wherein the applying is preferably performed using electrospinning;
   - optionally coating of a second adhesive layer (i) on top of the first layer or (ii) on top of the second layer; and
   - optionally applying the third layer (iii) on top of the first layer, (iv) on top of the second adhesive layer coated onto the first layer, if present, (v) on top of the second layer or (vi) on top of the second adhesive layer coated onto the second layer, if present;
   wherein the first slurry comprises water and cellulosic fibers.
37. Process of item 36, wherein the applying is performed by meltblowing a first fine fiber layer and spunbonding a second fine fiber layer on top of the first fine fiber layer.
38. A fuel water separation filter medium for removing water from water-hydrocarbon emulsions which is obtainable by the process according to items 36 or 37.
39. A fuel water separator for removing water from water-hydrocarbon emulsions comprising the medium according to any of items 1 to 35 and 38.
40. The fuel water separator according to item 39, wherein the filter medium is pleated.
41. The fuel water separator according to any one of items 39-40, wherein the filter medium is corrugated.
42. The fuel water separator according to any one of items 39-41, wherein the filter medium includes a wire mesh supporting layer co-pleated with the filter medium.
43. The fuel water separator according to any one of items 39-41, wherein the filter medium does not include a wire mesh supporting layer co-pleated with the filter medium.
44. Use of the medium according to any of items 1 to 35 and 38 or of the fuel water separator according to items 39-43 for separating water from water-hydrocarbon emulsions.

### Specific embodiments

Additionally, the invention may be further illustrated by the following specific embodiments:
1. A self-cleaning filter media for use in fuel and hydraulic oil filtration applications comprising: a first layer on an upstream side of the self-cleaning media, the
   first layer comprising polyether sulfone nanofibers having a diameter of 50-1000 nm (0.05-1 micron) and a basis weight of at least 1 gsm; a second layer on a downstream side of the self-cleaning media, the second layer comprising a wet laid nonwoven; The self-cleaning filter media having a dust holding capacity of at least 5 mg/cm² according to ISO 19438 multipass test for fuel filtration.
2. The self-cleaning filter media of item 1, wherein the second layer comprises glass microfibers.
3. The self-cleaning filter media of item 2, wherein the second layer comprises at least 3% glass microfibers.
4. The self-cleaning filter media of item 1, wherein the self-cleaning filter media has a fuel filtration efficiency of greater than 99% for 4 micron particles when a filter element is tested according to ISO 19438.
5. The self-cleaning filter media of item 1, wherein the self-cleaning filter media has an oil filtration efficiency of greater than 99% for 4 micron particles when a filter element is tested according to ISO 4548-12.
6. The self-cleaning filter media of item 1, wherein the self-cleaning filter media has a fuel-water separation efficiency of at least 99% when a flat sheet is tested according to ISO 16332.
7. The self-cleaning filter media of item 1, wherein the first layer comprises nanofibers having a diameter of 500-700 nm.
8. The self-cleaning filter media of item 1, wherein the nanofibers of the first layer are electrospun directly onto the second layer.
9. The self-cleaning filter media of item 1, wherein the nanofibers are prepared from polyethersulfone and an adhesive.
10. The self-cleaning filter media of item 10, wherein the nanofibers comprise an electrospun blend of the polyethersulfone and the adhesive.
11. The self-cleaning filter media of item 10, wherein the adhesive is blended with the polyethersulfone in an amount of 1-5% prior to electrospinning the first layer.
12. A filter element comprising the media of item 1.
13. The filter element of item 12, wherein the filter element has a fuel filtration efficiency of greater than 99% for 4 micron particles when a filter element is tested according to ISO 19438.
14. The filter element of item 12, wherein the filter element has an oil filtration efficiency of greater than 99% for 4 micron particles when the filter element is tested according to ISO 4548-12.
15. The filter element of item 12, wherein the filter element has a lifetime of at least 1:30 hr (90 minutes) when tested according to ISO 19438 using Medium Test Dust and a pressure drop of 70kPa.
16. The filter element of item 12, wherein the filter element has a lifetime of at least 1:30 hr (90 minutes) when tested according to ISO 4548-12 using Medium Test Dust and a pressure drop of 70kPa.
17. The filter element of item 12, wherein the filter element has a lifetime of at least 2.0 hr (120 minutes) when tested according to ISO 19438 using Medium Test Dust and a pressure drop of 70kPa.
18. The filter element of item 12, wherein the filter element has a lifetime of at least 2.0 hr (120 minutes) when tested according to ISO 4548-12 using Medium Test Dust and a pressure drop of 70kPa.
19. A method of filtering particles from fuel, comprising the step of: passing the fuel through filter element having a self-cleaning filter media that comprises a first layer on an upstream side of the self-cleaning media, the first layer comprising polyether sulfone nanofibers having a diameter of 50-1000 nm (0.05-1 micron) and a basis weight of at least 1 gsm; a second layer on a downstream side of the self-cleaning media, the second layer comprising a wet laid nonwoven; wherein the self-cleaning filter media has a dust holding capacity of at least 5 mg/cm2 according to ISO 19438 multipass test for fuel filtration, such that the fuel passes first through the first layer and then through the second layer so that particles collect as a cake on a surface of the first layer and, when sufficient particles have accumulated, the cake sloughs off and can be collected at the bottom of the filter element.
20. A method of filtering particles from hydraulic oil, comprising the step of: passing the hydraulic oil through filter element having a self-cleaning filter media that comprises a first layer on an upstream side of the self-cleaning media, the first layer comprising polyether sulfone nanofibers having a diameter of 50-1000 nm (0.05-1 micron) and a basis weight of at least 1 gsm; a second layer on a downstream side of the self-cleaning media, the second layer comprising a wet laid nonwoven; wherein the self-cleaning filter media has a dust holding capacity of at least 5 mg/cm2 according to ISO 19438 multipass test for fuel filtration, such that the hydraulic oil passes first through the first layer and then through the second layer so that particles collect as a cake on a surface of the first layer and, when sufficient particles have accumulated, the cake sloughs off and can be collected at the bottom of the filter element.

## Claims

1. A process for the preparation of a fuel water separation medium, the process comprising the steps of
• providing a first homogeneous slurry comprising water and cellulosic fibers;
• supplying the first slurry onto a dewatering screen to form a first deposit;
• removing the water from the deposit to form a wet fibrous web;
• drying the wet fibrous web while heating to form the second layer;
• optionally saturating the thus obtained second layer with at least a binder resin;
• optionally coating of a first adhesive layer on top of the thus obtained second layer;
• applying a first layer on top of the second layer or on top of the first adhesive layer coated onto the second layer, wherein the applying is preferably performed using electrospinning;
• optionally coating of a second adhesive layer (i) on top of the first layer or (ii) on top of the second layer; and
• optionally applying the third layer (iii) on top of the first layer, (iv) on top of the second adhesive layer coated onto the first layer, if present, (v) on top of the second layer or (vi) on top of the second adhesive layer coated onto the second layer, if present, wherein the applying is preferably performed by meltblowing a first fine fiber (sub-)layer and spunbonding a second fine fiber layer on top of the first fine fiber (sub-)layer.

2. The process according to claim 1, wherein the first layer comprises nanofibers.

3. The process according to claim 2, wherein the nanofibers have an average fiber diameter of 50 to 350 nm, preferably 100 to 300 nm.

4. The process according to any of claims 2 and 3, wherein the nanofibers of the first layer are electrospun directly onto the second layer or on top of the first adhesive layer coated onto the second layer.

5. The process according to any of claims 2 to 4, wherein the nanofibers are synthetic nanofibers prepared from the following thermoplastic polymeric materials: polyethersulfone (PES); polyacrylonitrile; polyamide (PA) such as nylon; fluoropolymer such as polyvinylfluoride (PVDF); and/or mixtures thereof.

6. The process according to any of claims 1 to 5, wherein the second layer has a basis weight in the range of 60 to 250 g/m², preferably in the range of 100 to 170 g/m².

7. The process according to any of claims 1 to 6, wherein the fibrous web comprises substantially no glass fibers.

8. The process according to any of claims 1 to 7, wherein the fibrous web comprises substantially no synthetic fibers.

9. The process according to any of claims 1 to 8, wherein the fibrous web comprises cellulosic fibers in an amount of at least 50 % by weight, preferably at least 60 % by weight or at least 70 % by weight, more preferably at least 80 % by weight or 90 % by weight based on the total weight of the second layer.

10. The process according to any of claims 1 to 9, wherein the fuel water separation medium has a TSI aerosol penetration of less than or equal to about 15%.

11. The process according to any of claims 1 to 10, wherein the fuel water separation medium is pleated.

12. The process according to any of claims 1 to 11, wherein the medium does not include a wire mesh supporting layer co-pleated with the filter medium.

13. A fuel water separation medium obtainable by the process of any of claims 1 to 12.

14. Use of the fuel water separation medium of claim 13 for separating water from water-hydrocarbon emulsions.

15. A fuel water separator for removing water from water-hydrocarbon emulsions comprising the medium according to claim 13.
